# EUROPÄISCHE PATENTSCHRIFT

(11) **EP 1 752 668 B1**
(45) Veröffentlichungstag und Bekanntmachung des Hinweises auf die Patenterteilung: **04.12.2013**
(21) Anmeldenummer: 06118317.4
(22) Anmeldetag: 02.08.2006
(51) Int. Cl.: F16B 21/18

(54) **Anordnung zur axialen Sicherung eines mit einer Nut versehenen Bolzens**
Arrangement for preventing axial movement of a bolt provided with a groove
Dispositif pour empêcher le mouvement axial d'un boulon avec une cannelure

(30) Priorität: 08.08.2005 DE 102005037825
(43) Veröffentlichungstag der Anmeldung: 14.02.2007
(73) Patentinhaber: Demag Cranes & Components GmbH, 58300 Wetter (DE)
(72) Erfinder: Fitzler, Stefan, 58636, Iserlohn (DE); Müller, Sven, 58339, Breckerfeld (DE); Birkigt, Reinhard, 58313, Herdecke (DE); Gersemsky, Udo, 58313, Herdecke (DE)
(74) Vertreter: Moser & Götze

(56) Entgegenhaltungen:
- DE-U1- 8 019 658
- FR-A- 2 745 612

## Beschreibung

Die Erfindung betrifft eine Anordnung zur axialen Sicherung eines mit einer Nut versehenen Bolzens mit einem in einer Sicherungsstellung in die Nut an zumindest gegenüberliegenden Bereichen der Nut eingreifenden und in der Sicherungsstellung dort gehaltenen Sicherungsteil, wobei die Anordnung ferner ein gesondertes in axialer Richtung des Bolzens von diesem durchgriffenen Element aufweist, das von dem Sicherungsteil in Sicherungsstellung in Höhe der Nut festgelegt ist und das das Sicherungsteil in der Sicherungsstellung zumindest teilweise umgreift, wobei das Sicherungsteil zum Lösen aus der Sicherungsstellung relativ zu dem Element in eine Offenstellung verschieblich bewegbar ist.

Eine derartige Anordnung zur axialen Sicherung eines mit einer Nut versehenen Bolzen ist beispielsweise aus der französischen Offenlegungsschrift FR 2 745 612 A1 bekannt.

Solche auch als Bolzensicherungen bezeichneten Vorrichtungen sind in vielfältigen Abwandlungen bekannt. Eine einfache Variante sind Sicherungsbügel, die in die Nut des Bolzens klemmend eingeschoben werden. Ein derartiger Sicherungsbügel ist beispielsweise in der DE 37 04 650 C2 gezeigt. Dabei wird für die klemmende Sicherung die von dem Sicherungsbügel bewirkte Federkraft beim Einschieben in die Nut überwunden. Entsprechend muss diese zur Demontage des Sicherungsbügels auch wieder überwunden werden. Oft werden die Sicherungsbügel dabei zerstört bzw. verbogen.

Zusätzlich ist es bekannt, Sicherungsklemmen einzusetzen, wie sie beispielsweise aus der DE 80 19 658 U1 bekannt sind. Diese Klemmen weisen neben einem in die Nut einzuschiebenden u-förmigen Bügel oder Blech ein Sicherungselement auf, das aus zwei aufeinander zu gebogene Sicherungszungen besteht, die den Bolzen im Sicherungszustand klemmend umgreifen. Der u-förmige Bügel wird durch die klemmende Wirkung der Sicherungszungen im Sicherungszustand in der Nut gehalten. Da diese Klemmen aus einem einzigen Blech gestanzt und gebogen sind, sind sowohl die Haltekraft des Bügels als auch die Federkraft der Sicherungszungen unweigerlich nicht beliebig und unabhängig von einander wählbar. Auch wird das gesamte Bauteil mit den Axialkräften des Bolzens belastet.

Aus der DE 20 2004 019 671 U1, EP 0 990 807 A1, US 4,009,896 sowie US 5,518,332 sind alle samt Anordnungen zur axialen Sicherung eines mit einer Nut versehenen Bolzens bekannt, bei denen ein Federdraht durch aufspreizende Bewegung in die Nut eingeführt und dort durch die Federkraft beaufschlagt klemmende gehalten wird. Bei diesen Anordnungen erfolgt die eigentliche Sicherung nur über den Federdraht. Es sind jedoch ggf. zusätzliche Elemente vorgesehen, die mit dem Sicherungsfederdraht verbunden sind und zu dessen Verkleidung, Festlegung in der freigebenden Stellung oder auf Grund ihrer Gestalt zur Sicherung weiterer von dem Bolzen durchgegriffenen Vorrichtungen dienen.

Aufgabe der Erfindung ist es demgegenüber, eine Anordnung zur axialen Sicherung eines mit einer Nut versehenen Bolzens bereitzustellen, die einfach und zuverlässig ist. Zudem sollte die Vorrichtung möglichst klein sein und ohne aufwendige Bearbeitung des Bolzens auskommen.

Diese Aufgabe wird durch die in Anspruch 1 wiedergegebene Anordnung gelöst. Vorteilhafte Ausgestaltungen dieser Anordnung sind in den Ansprüchen 2 bis 19 angegeben.

Erfindungsgemäß wird bei einer Anordnung zur axialen Sicherung eines mit einer Nut versehenen Bolzens mit einem in einer Sicherungsstellung in die Nut an zumindest gegenüberliegenden Bereichen der Nut eingreifenden und in der Sicherungsstellung dort gehaltenen Sicherungsteil, eine einfache und zuverlässige Ausbildung dadurch erreicht, dass die Anordnung ferner ein gesondertes in axialer Richtung des Bolzens von diesem durchgriffenes Element aufweist, das von dem Sicherungsteil in Sicherungsstellung in Höhe der Nut festgelegt ist und das das Sicherungsteil in der Sicherungsstellung zumindest teilweise umgreift, wobei ein leichtes Montieren und Demontieren des Sicherungsteils bzw. Sichern und Entsichern dadurch erreicht wird, dass das Sicherungsteil zum Lösen aus der Sicherungsstellung relativ zu dem

Element in eine Offenstellung entgegen der Sicherungsrichtung verschieblich bewegbar ist

Diese neue Anordnung verfolgt das Prinzip durch Zusammenwirken zweier Bauteile, hier das Sicherungsteil und das Element, die in Bezug auf den Bolzen jeweils nur in unterschiedlichen, hier rechtwinkligen Richtungen zueinander beweglich sind, eine effektive Sicherung zu erreichen.

Das in die Nut eingreifende Sicherungsteil dient zur Axialsicherung des Bolzens und kann leicht in die Nut eingeschoben und heraus geschoben werden.

Das Element kann je nach Ausgestaltung verschiedene Funktionen aufweisen. So besitzt es im einfachsten Fall die Funktion eines Schutzes des Sicherungsteils gegen ungewolltes entsichern auf Grund von Störkonturen. Zusätzlich oder alternativ kann es eine Verliersicherungsfunktion aufweisen, da es mit dem Sicherungsteil verbunden sein kann. Wiederum zusätzlich oder alternativ kann es eine Haltefunktion derart aufweisen, dass es das Sicherungsteil an der Nut in der Sicherungsstellung hält.

Je nach Ausgestaltung bzw. Funktion des Elements kann das Sicherungsteil neben der Sicherungsfunktion auch selbst die Haltefunktion übernehmen. Dann hat das Element lediglich eine Schutzfunktion und eine Verliersicherungsfunktion. Hierdurch erfolgt eine klare Trennung der jeweiligen Funktionen und es können die jeweiligen Teile entsprechend optimiert werden.

Andererseits ist es auch möglich, dass das Element zusätzlich eine Haltefunktion aufweist, so dass eine "doppelte" Sicherheit gegeben ist.

Besonders sicher ist, dass das Element das Sicherungsteil in der Sicherungsstellung formschlüssig hält bzw. in seiner Kontur aufnimmt.

Bevorzugt und konstruktiv besonders einfach ist vorgesehen, dass das Sicherungsteil ein u-förmiger Sicherungsbügel ist. Der Sicherungsbügel kann ein gebogener Draht oder ein Blechteil sein.

Als konstruktiv besonders einfach erweist sich die Bauweise des Sicherungsteils als u-förmiger Sicherungsbügel mit zwei parallelen Schenkeln. An den freien Enden der Schenkel schließen sich vorzugsweise nach außen gerichtete Abwinkelungen an, über die das Sicherungsteil mit dem Element verbunden ist. Auf diese Weise kann die Verliersicherungsfunktion unkompliziert ausgestaltet werden. Die Abwinkelungen können ferner die Aufgabe haben, das Sicherungsteil in der Sicherungsstellung zu halten (vgl. unten).

Vorteilhaft ist vorgesehen, dass das Element im Wesentlichen ein u-förmiges Blech ist, das das Sicherungsteil zumindest teilweise umgreift, und in der Mitte des Elements eine Durchbrechung zum Aufschieben auf den Bolzen vorgesehen ist. Diese Ausgestaltung erlaubt eine einfache und kostengünstige Herstellung durch Stanzen und Formen.

Dadurch dass an der Durchbrechung des Elements Führungslaschen angrenzen, deren Länge in Aufschieberichtung des Elements auf den Bolzen gesehen größer als die Breite der Nut ist, wird sicher vermieden, dass beim Aufschieben des Elements auf den Bolzen einer der Schenkel des Elements in die Nut rutscht und die Montage der Bolzensicherung erschwert wird.

Ein leichtes Montieren und Demontieren des Sicherungsteils bzw. Sichern und Entsichern wird dadurch erreicht, dass das Element federnd vorgespannte Rastflächen aufweist, die ein Zurückbewegen des Sicherungsteils aus der Sicherungsstellung in die Offenstellung verhindern. In diesem Fall muss das Sicherungsteil nicht selbst eine Haltefunktion übernehmen und kann entsprechend der Sicherungsfunktion optimiert werden. Hierdurch erfolgt eine klare Trennung der Funktionen des Sicherungsteils und des als Halteteil dienenden Elements. Das in die Nut eingreifende Sicherungsteil dient nur zur Axialsicherung des Bolzens und kann leicht in die Nut eingeschoben und heraus geschoben werden, da dieses nicht in Richtung der Nut federnd vorgespannt wird. Das Sicherungsteil wird allein durch das Element und dessen Rastflächen in der Sicherungsstellung gehalten (Haltefunktion). Hierbei ist es von Vorteil, wenn die Abwinkelungen der Schenkel des Sicherungsteils die Rastflächen in der Sicherungsstellung hintergreifen.

Vorzugsweise ist das Sicherungsteil zwischen den Schenkeln des Elements aus seiner Offenstellung an einem Ende des Elements in Sicherungsrichtung in seine Sicherungsstellung an dem anderen Ende des Elements verschiebbar.

Das Sicherungsteil ist vorteilhafterweise in der Offenstellung verliersicher mit dem Element dadurch verbunden, dass das Element im Bogen zwischen den beiden Schenkeln eine Ausnehmung aufweist, die derart bemessen ist, dass das Sicherungsteil mit seinen beiden Schenkeln durch die Ausnehmung auf dem Weg aus der Sicherungsstellung in die Offenstellung hindurch schiebbar ist. Die beiden Abwinkelungen des Sicherungsteils verbleiben somit in der Offenstellung zwischen dem oberen und unteren Schenkel des Halteteils.

Vorteilhafter Weise wird eine große Federkraft und somit gute Rastwirkung sowie auch Widerverwendbarkeit des Elements dadurch erreicht, dass ein Schenkel des Elements im Bereich seines freien Endes zur Ausbildung der Rastflächen in der Sicherungsstellung an dem anderen Schenkel federnd vorgespannt anliegt.

Bevorzugt ist vorgesehen, dass der andere untere Schenkel länger als der obere Schenkel ist, an dem freien Ende des anderen Schenkels mindestens eine Abwinkelung angeordnet ist und in der Sicherungsstellung das Sicherungsteil mit seinen Abwinkelungen zwischen der Abwinkelung des anderen Schenkels und den Rastflächen des Schenkels gehalten ist. Die Position des Sicherungsteils in der Nut kann somit sicher in und gegen die Sicherungsrichtung gehalten werden.

Das Element ist in einer ersten Weise so ausgestaltet, dass an dem Schenkel die Rastflächen in der Weise ausgebildet sind, dass das freie Ende des Schenkel quer zur Sicherungsrichtung bis zur Anlage an den anderen Schenkel gebogen ist, das freie Ende des Schenkel eine Abwinkelung aufweist, an deren Rückseite die Rastflächen ausgebildet sind, an die sich Ausnehmungen zur Durchführung der Schenkel des Sicherungsteils anschließen. Die Abwinkelungen des Sicherungsteils können somit über eine relativ große Rastfläche zuverlässig in der Sicherungsstellung gehalten werden.

Eine zweite Ausgestaltung des Elements sieht vor, dass an dem freien Ende der Schenkel die Rastflächen in der Weise ausgebildet sind, dass das freie Ende des Schenkels jeweils schräg zur Sicherungsrichtung bis zur Anlage an den anderen Schenkel gebogen ist. Die Rastflächen werden zwar kleiner, aber da die nach unten gebogenen Enden des oberen Schenkels nur jeweils im Randbereich des oberen Schenkels angeordnet sind, können ohne eine Ausbildung entsprechender Ausnehmungen die Schenkel des Sicherungsteils in der Sicherungsstellung an den Rastflächen vorbei und mit ihren Abwinkelungen hinter die Rastflächen geführt werden.

In einer dritten Ausgestaltung des Elements ist vorgesehen, dass an dem Schenkel die Rastflächen in der Weise ausgebildet sind, dass in dem freien Ende des Schenkels schräg in Richtung zu dem anderen Schenkel gebogene Federlaschen angeordnet sind, an deren freien Enden die Rastflächen ausgebildet sind. Hierdurch wird erreicht, dass das Element insgesamt eine quaderförmige Außenkontur erhält, da nicht ein Endteil des oberen Schenkels zur Ausbildung der Rastfläche nach unten gebogen wird, sondern nur ein kleiner Ausschnitt des oberen Schenkels in Form der Federlaschen. In dieser Ausführung ist das Sicherungsteil in der Sicherungsstellung von dem Element eingehaust und somit geschützt.

In einer weiteren Ausgestaltung weist das Element, wie oben bereits dargelegt, lediglich eine Schutzfunktion und eine Verliersicherungsfunktion auf. Dazu ist es ähnlich wie in der dritten Ausgestaltung ausgebildet, jedoch weist es keine Rastflächen auf. Diese sind nicht nötig, da das Sicherungsteil mindestens eine Einschnürung und eine Aufweitung derart aufweist, dass es klemmend an der Nut in Sicherungsstellung festlegbar ist. Somit übernimmt das Sicherungsteil neben der Sicherungsfunktion auch eine Haltefunktion (vgl. oben).

Um die Demontage der Anordnung durch Entsicherung zu erleichtern, kann in dem Element ein Demontagefenster vorgesehen sein, durch das das Element zur Freigabe des Sicherungsteils entsichert werden kann. Insbesondere kann das Demontagefenster in der mindestens einen Abwinkelung vorgesehen ist. Dies kann mit einem geeigneten Werkzeug, z. B. Schraubenzieher vorgenommen werden. Andererseits ist es auch möglich, dass das Element eine Hebellasche zur Freigabe des Sicherungsbügels aufweist, so dass kein Werkzeug zur Entsicherung benötigt wird.

Es versteht sich, dass unterschiedliche Kombinationen der zuvor genannten Ausgestaltungen möglich sind.

Weitere Merkmale, Einzelheiten und Vorteile der Erfindung ergeben sich aus den Ansprüchen und der nachfolgenden Beschreibung von Ausführungsbeispielen anhand der Zeichnung, in der die vorliegende Erfindung näher erläutert wird. Es zeigen:
- Figur 1: eine perspektivische Ansicht von schräg oben auf einen Bolzenkopf mit einer erfindungsgemäßen Bolzensicherung vor der eigentlichen Sicherung;
- Figur 2: die Bolzensicherung aus Figur 1 in der Sicherungsstellung am Bolzenkopf;
- Figur 3: eine Seitenansicht der Bolzensicherung aus Figur 2;
- Figur 4: eine Draufsicht auf die entlang der Linie A-A geschnittene Bolzensicherung aus Figur 3;
- Figur 5: eine perspektivische Ansicht von schräg oben auf einen Bolzenkopf mit einer weiteren erfindungsgemäßen Bolzensicherung vor der eigentlichen Sicherung;
- Figur 6: die Bolzensicherung aus Figur 5 in der Sicherungsstellung am Bolzenkopf;
- Figur 7: eine Seitenansicht der Bolzensicherung aus Figur 6;
- Figur 8: eine Draufsicht auf die entlang der Linie A-A geschnittene Bolzensicherung aus Figur 7;
- Figur 9: eine perspektivische Ansicht von schräg oben auf einen Bolzenkopf mit einer weiteren erfindungsgemäßen Bolzensicherung vor der eigentlichen Sicherung;
- Figur 10: die Bolzensicherung aus Figur 9 in der Sicherungsstellung am Bolzenkopf;
- Figur 11: eine Seitenansicht der Bolzensicherung aus Figur 10;
- Figur 12: eine Draufsicht auf die entlang der Linie A-A geschnittene Bolzensicherung aus Figur 11;
- Figur 13: eine perspektivische Ansicht von schräg oben auf einen Bolzenkopf mit einer weiteren erfindungsgemäßen Bolzensicherung vor der eigentlichen Sicherung;
- Figur 14: die Bolzensicherung aus Figur 13 in der Sicherungsstellung am Bolzenkopf;
- Figur 15: eine Seitenansicht der Bolzensicherung aus Figur 14 und
- Figur 16: eine Draufsicht auf die entlang der Linie A-A geschnittene Bolzensicherung aus Figur 15.

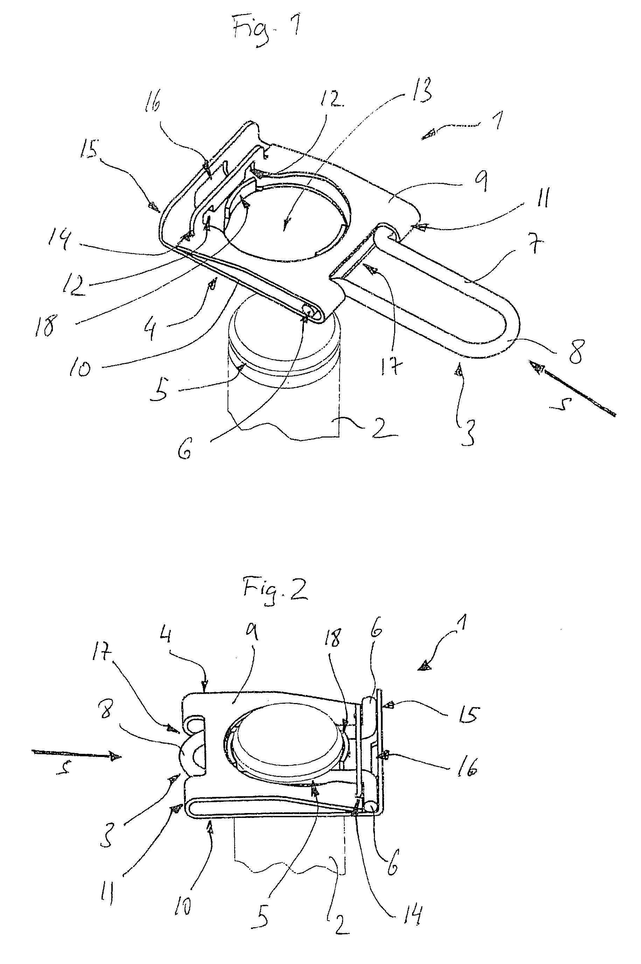

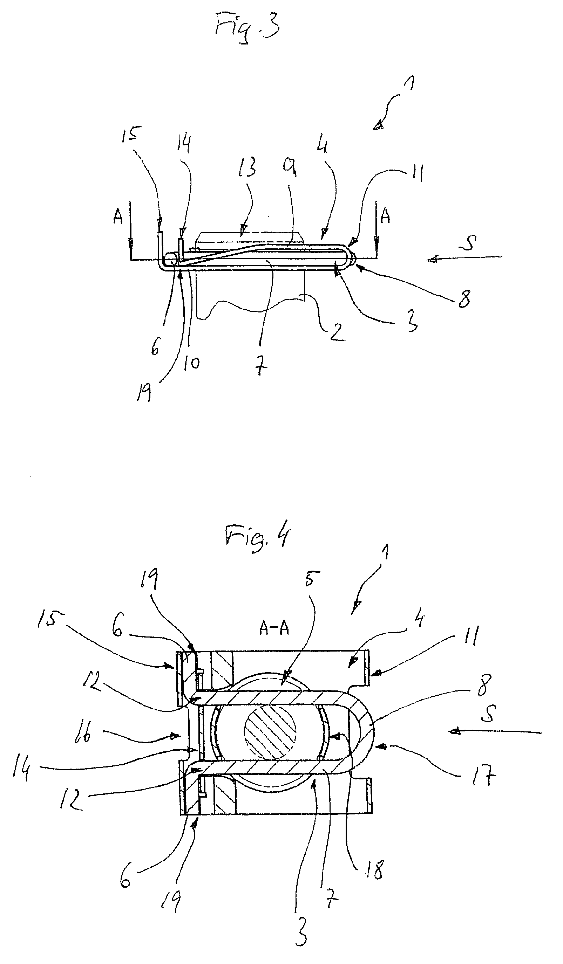

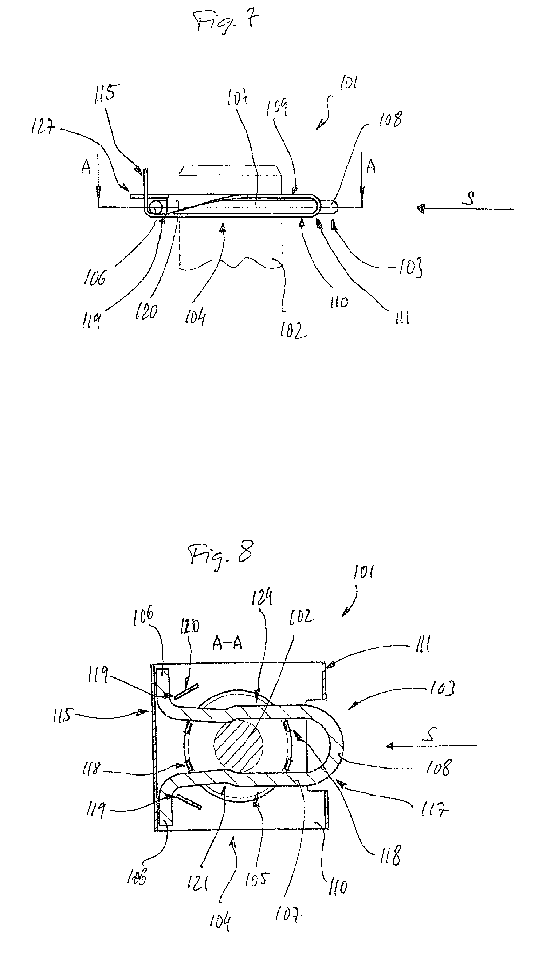

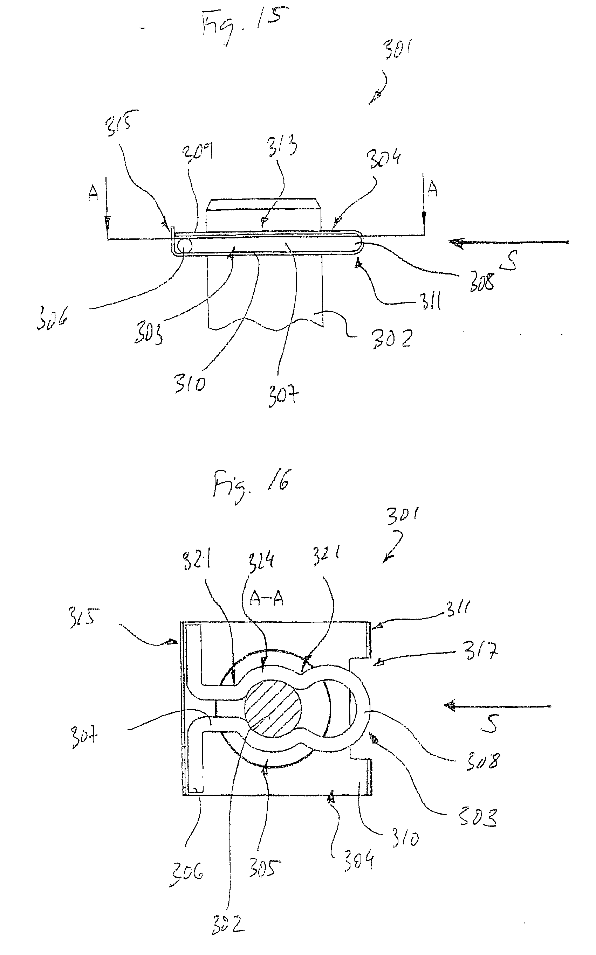

In den Figuren 1 bis 16 ist die gesamte Anordnung zur axialen Sicherung eines mit einer Nut 5, 105, 205, 305 versehenen Bolzens 2, 102, 202, 302 oder dergleichen, also eine Bolzensicherung, mit 1, 101, 201, 301 bezeichnet. Sie umfasst ein als Sicherungsbügel ausgebildetes Sicherungsteil 3, 103, 203, 303, das aus einer Offenstellung in eine Sicherungsstellung relativ zu einem Element 4, 104, 204, 304 verschiebbar ist. In der Sicherungsstellung greift das Sicherungsteil 3, 103, 203, 303 in die Nut 5, 105, 205, 305 ein und wird in der Sicherungsstellung von dem mit dem Sicherungsteil 3, 103, 203, 303 beweglich verbundenen und als u-förmiges Blech ausgebildeten Element 4, 104, 204, 304 umgriffen.

In den Figuren 1 bis 4 ist eine erste Ausführungsform der Bolzensicherung 1 dargestellt. Das Sicherungsteil 3 besteht aus einem der Nut 5 im Querschnitt angepasstem Stahldraht und besitzt eine im Wesentlichen u-förmige Gestalt. Es umfasst zwei parallele Schenkel 7, die über einen Bogen 8 miteinander verbunden sind. Der Abstand der Schenkel 7 ist dem Durchmesser der Nut 5 angepasst. An ihren freien Enden weisen die Schenkel 7 jeweils eine nach außen gerichtete Abwinkelung 6 um etwa 90°auf, die mit dem Sicherungsteil 3 in einer Ebene liegen und entsprechend einander entgegengesetzt ausgerichtet sind. Somit sieht das Sicherungsteil 3 etwa omegaförmig aus.

Das Element ist als Halteelement 4 ausgebildet und besteht aus einem geeigneten Federstahl und besitzt ebenfalls eine im Wesentlichen u-förmige Gestalt. Das Halteelement 4 umfasst einen ersten oberen Schenkel 9 und einen zweiten unteren Schenkel 10, die in etwa parallel verlaufen und etwa senkrecht zur Achse des Bolzens 2 in der Sicherungsstellung der Bolzensicherung 1 ausgerichtet sind. Der erste Schenkel 9, der in den Figuren oben beziehungsweise am Bolzen 2 außen liegt, ist kürzer als der untere Schenkel 10.

Durch beide Schenkel 9, 10 verläuft zentral eine an den Durchmesser des Bolzen 2 angepasste Durchbrechung 13, so dass das Halteelement 4 auf den Bolzen 2 gleitend aufgeschoben werden kann. An zwei Seiten der Durchbrechung 13 sind Führungslaschen 18 vorgesehen, um ein Verklemmen des Federblechs 4 an beziehungsweise in der Nut 5 zu verhindern. Entsprechend weisen die Führungslaschen 18 in Längsrichtung des Bolzens 2 gesehen eine größere Länge als die Breite der Nut 5 auf. Die Führungslaschen 18 sind durch angewinkelte Blechlaschen gebildet, deren Länge in etwa dem Abstand der Schenkel 9, 10 entspricht.

Ferner weist das Halteelement 4 entsprechend seiner u-förmigen Gestalt einen die Schenkel 9, 10 verbindenden Bogen 11 auf, der so bemessen ist, das der Abstand der Schenkel 9, 10 in etwa dem Durchmesser des Drahts des Sicherungsteils 3 entspricht. Im mittleren Bereich des Bogens 11 ist eine Ausnehmung 17 vorgesehen, die der Breite des Sicherungsbügels 3 im Bereich seiner Schenkel 7 und seines Bogens 8 angepasst ist, so dass dieser bis auf seine Abwinklungen 6 durch die Ausnehmung 17 aus der Sicherungsstellung zurück in die Offenstellung hindurch schiebbar ist.

An den freien Enden der Schenkel 9, 10 ist jeweils eine Abwinkelung 14, 15 um etwa 90 ° vorgesehen, die etwa parallel zu einander verlaufen und gleichsinnig nach oben ausgerichtet sind. Die Abwinkelung 15 verläuft über die gesamte Breite des Schenkels 10. Die Abwinkelung 14 am Schenkel 9 verläuft dagegen nicht über die gesamte Breite des Schenkels, sondern es befindet sich an den jeweiligen Enden ein nicht gekantetes Stück bzw. eine Lasche, die jeweils bis unterhalb der Mitte des Sicherungsbügels 3 ragen und Rastflächen 19 bilden. Dabei entsteht aufgrund der unterschiedlichen Länge der Schenkel 9, 10 ein Abstand zwischen den Abwinkelungen 14 und 15, der der Aufnahme der Abwinklungen 6 in der Sicherungsstellung dient.

Der erste Schenkel 9 des Federblechs 4 verläuft nach dem Bogen 11 zunächst etwa parallel zum zweiten Schenkel 10. Etwa im Bereich der Mitte des Schenkels 9 knickt der erste Schenkel 9 dann in Richtung des zweiten Schenkels 10 ab, so dass er in etwa am Übergang zu seiner Abwinkelung 14 auf den zweiten Schenkel 10 zur Anlage kommt. Aufgrund der Vorspannung kann der Sicherungsbügel 3 den Schenkel 9 beim Herausziehen nie abheben, sondern ist zwischen den Schenkeln 9, 10 eingespannt.

Die Gesamtbreite und ―länge des Federblechs 4 ist der Gesamtbreite und -länge des Sicherungsteils 3 inklusive seiner Abwinkelungen 6 angepasst. In der Sicherungsstellung befindet sich das Sicherungsteils 3 mit seiner Außenkontur vollständig in der Außenkontur des Halteelements 4.

Im losen unverbauten Zustand also in seiner Offenstellung hängt das Sicherungsteil 3 locker an dem Halteelement 4, wobei die Abwinkelungen 6 des Sicherungsteils 3 zwischen den Schenkeln 9, 10 des Halteelements 4 etwa an dessen Bogen 11 gehalten sind und das Sicherungsteil 3 dabei mit seinen Schenkeln 7 und seinem Bogen 8 durch die Ausnehmung 17 des Halteelements 4 am Bogen 11 hindurch steht bzw. hängt.

Zur Montage wird das Halteelement 4 auf den Bolzen 2 aufgeschoben, wobei der Bolzen 2 durch die Durchbrechung 13 im Halteelement 4 hindurch greift und das Halteelement 4 über die Führungslaschen 18 an dem Bolzen 2 geführt ist, so dass es nicht in die Nut 5 eingreifen kann. Auf Höhe der Nut 5 wird dann das seitlich aus der Ausnehmung 17 herausragende Sicherungsteil 3 in Sicherungsrichtung S seitlich in die Nut 5 bis zum Einrasten hinter den Rastflächen 19 des oberen Schenkels 9 des Halteelements 4 eingeschoben. Dabei ist nur die Federkraft des Halteelements 4 zu überwinden, was aufgrund der Formgebung entlang einer schiefen Ebene erfolgt und von daher sehr geringe Kräfte erfordert.

Dazu wird das Sicherungsteil 3 mit seinen beiden Abwinkelungen 6 in Sicherungsrichtung S in den Bereich der freien aufeinander liegenden Enden der Schenkel 9, 10 des Federblechs bzw. Halteelements 4 gedrückt, so dass der obere Schenkel 9 sich elastisch von dem unteren Schenkeln 10 abhebt. Die Abwinkelungen 6 des Sicherungsteils 3 rutschen daraufhin weiterhin in Sicherungsrichtung S zwischen den Schenkeln 9, 10 durch, bis diese zur Anlage an die äußere Abwinkelung 15 des unteren Schenkels 10 gelangen. Gleichzeitig verliert die Abwinklung 6 des Bügels 3 den Kontakt mit dem freien Ende des kürzeren oberen Schenkels 9 und der obere Schenkel 9 kommt auf Grund seiner Federvorspannung zur Anlage mit dem unteren Schenkel 10. Dies ist nur möglich, da die Abwinkelung 14 des oberen Schenkels 9 zusätzlich zwei nach unten zu dem unteren Schenkel 10 offene Ausnehmungen 12 aufweist. Durch diese Ausnehmungen 12 sind dann die Schenkel 7 des Sicherungsteils 3 durchgeführt, wenn das Sicherungsteil 3 sich in der Sicherungsstellung befindet.

In der Sicherungsstellung wird das Sicherungsteil 3 dann an einem Zurückbewegen gegen die Sicherungsrichtung S und entlang des Halteelements 4 durch Laschen neben der Abwinkelung 14 des oberen Schenkels 9 gehindert, die die Funktion einer Rastfläche 19 haben und somit die Abwinkelung 6 des Sicherungsteils 3 bei einem Zurückbewegen gegen die Sicherungsrichtung S aufhalten.

Das Sicherungsteil 3 wird dabei formschlüssig in dem Halteelement 4 gehalten, dessen Federkraft so gewählt wird, dass ein zuverlässiges Halten des Sicherungsteils 3 gewährleistet ist. Durch den Formschluss muss das Sicherungsteil 3 keine eigene Klemmkraft am Bolzen 2 aufbringen, was eine geringere Belastung des Sicherungsteils 3 mit sich bringt. Das Halteelement 4 wird dagegen nur durch seine eigene Federkraft belastet, da axiale Kräfte am Bolzen 2 vorrangig nur vom Sicherungsbügel 3 aufgenommen werden.

Zur Demontage weist die Bolzensicherung 1 ein Demontagefenster 16 in der Abwinklung 15 des Halteelements 4 auf. Um die aneinander gedrückten Schenkel 9, 10 des Halteelements 4 für eine Entriegelung des Sicherungsteil 3 aufzuhebeln, wird durch das Demontagefenster 16 beispielsweise ein Schraubenzieher unter den einen oberen Schenkel 9 des Halteelements 4 geschoben und dieser angehoben. Hierdurch werden dann die Abwinkelungen 6 des Sicherungsteils 3 freigegeben und das Sicherungsteil 3 kann aus der Nut 5 herausgezogen werden. Dabei wird der Hebelweg des Schraubenziehers durch den Rand des Demontagefenster 16 eingeschränkt, so dass ein Überdehnen des Federblech und somit seine Zerstörung durch Verformung bei der Demontage verhindert wird.

Somit weist das Halteelement 4 in dieser Ausführungsform neben der Schutz- und Verliersicherungsfunktion auch eine Haltefunktion auf. Der Sicherungsbügel 3 hat nur eine Sicherungsfunktion.

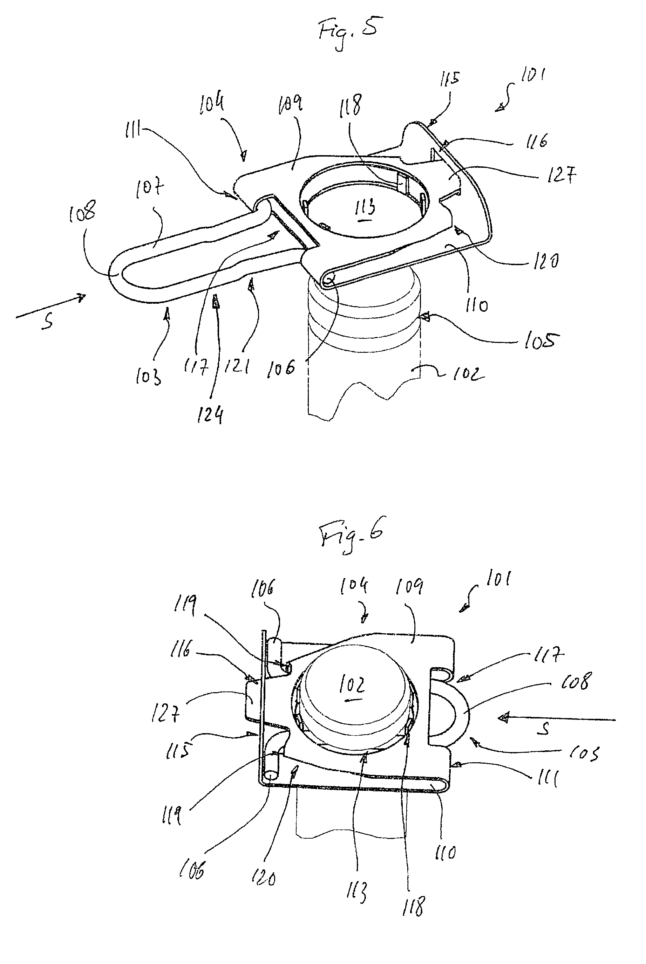

In den Figuren 5 bis 8, 9 bis 12 und 13 bis 16 sind drei weitere Varianten der oben beschriebenen Bolzensicherung 1 dargestellt. Diese unterscheiden sich nur unwesentlich von der ersten Bolzensicherung 1 und daher werden entsprechende Teile mit jeweils um 100 bzw. 200 bzw. 300 erhöhten Bezugszeichen bezeichnet. Ferner wird nachfolgend zur Vermeidung von Wiederholungen lediglich auf die Unterschiede eingegangen.

Die Bolzensicherung 101 der Figuren 5 bis 8 unterscheidet sich von der gerade beschriebenen zunächst dadurch, dass der Sicherungsteil 103 eine Engstelle oder Einschnürung 121 und eine Aufweitung 124 im Bereich der Schenkel 107 aufweist, die das Sicherungsteil 103 zusätzlich an dem Bolzen 102 im Bereich der Nut 105 festklemmt. Die Einschnürung 121 ist so gewählt, dass ein leichtes doch bestimmtes Aufschieben des Sicherungsteils 103 möglich bzw. notwendig ist. Dazu sind die Schenkel 107 im Bereich zwischen den Abwinkelungen 106 und der jeweiligen Einschnürung schräg verlaufend aufgeweitet, so dass das Aufschieben mehr Kraftaufwand erfordert als ohne Einschnürung 121. Die Aufweitung 124 hinter den Einschnürungen ist dem Durchmesser des Bolzens 102 in der Nut 105 angepasst.

Somit wird das Sicherungsteil 103 zusätzlich zu der rastenden Halterung durch das Halteelement104 und somit redundant in der Nut 105 in der Sicherungsstellung gehalten.

Als weiterer Unterscheid ist der eine obere Schenkel 109 des Halteelements 104 ohne Abwinkelung 14 ausgebildet und knickt entsprechend nicht quer zur Sicherungsrichtung S nach unten in Richtung des anderen Schenkels 110 des Federblechs ab, sondern die Ecken 120 der freien Enden des Schenkels 109 sind schräg zur Sicherungsrichtung S nach unten auf den Schenkel 110 herunter gebogen. Hierdurch verschmälert sich der Schenkel 109 an seinem freien Ende und liegt mit dem herunter gebogenen Bereich an dem untern Schenkel 110 an. Somit kann auch auf die Ausnehmungen 12 verzichtet werden, da die Ecken 120 nicht über die gesamte Breite des oberen Schenkels 109 verlaufen wie die Abwinkelung 14. An den Enden der Ecken 120 sind dann die Rastflächen 119 ausgebildet, die in der Sicherungsstellung ein Zurückgleiten des Sicherungsteils 103, insbesondere dessen Abwinkelungen 106, verhindern.

Ferner sind an Stelle der zwei Führungslaschen 18 vier stegartige Führungslaschen 118 vorgesehen, die von einander beabstandet sind und deren Lage an den Verlauf des Sicherungsteils 103 und dem Bolzen 102 angepasst ist.

Zur erleichterten, werkzeuglosen Demontage ist obere Schenkel 109 mit einer Hebellasche 127 versehen, die in geeigneter Weise durch das Demontagefenster 116 hindurchragt und eine Werkzeuglose Aufbiegung des Halteelements 104 zur Entsicherung bzw. Freigabe des Sicherungsbügels 103 aus den Rastflächen ermöglicht.

Somit weist das Halteelement 104 in dieser Ausführungsform neben der Schutz- und Verliersicherungsfunktion auch die Haltefunktion auf. Der Sicherungsbügel 103 hat zusätzlich zur Sicherungsfunktion noch eine Haltefunktion.

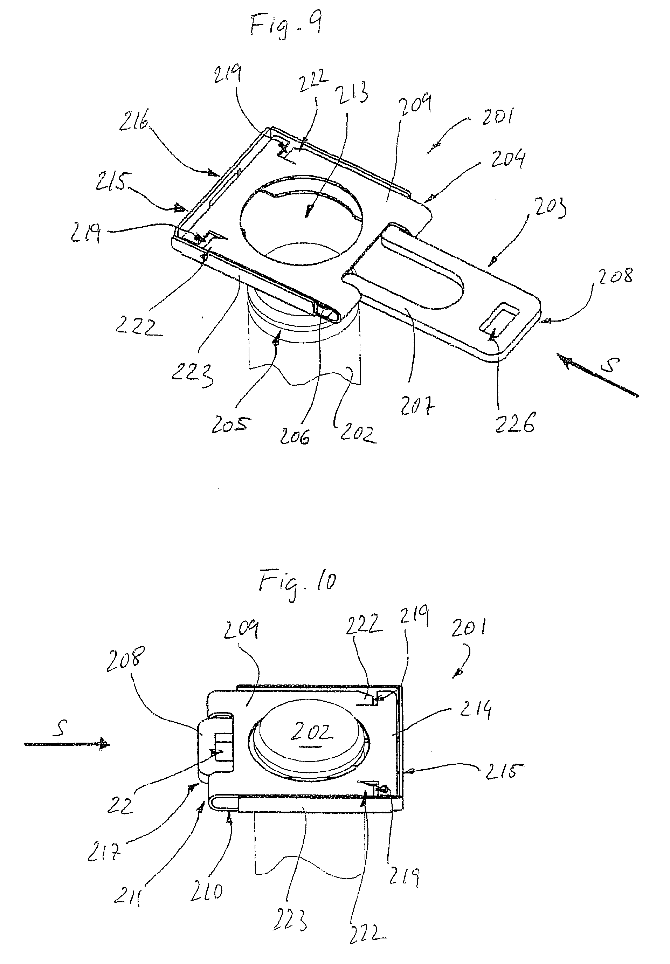

In den Figuren 9 bis 12 ist eine nochmals veränderte Variante 201 der zuvor beschriebenen Bolzensicherungen 1, 101 beschrieben.

Die Bolzensicherung 201 besteht wie die zuvor beschriebenen ebenfalls aus einem Sicherungsteil 203 und einem Halteelement 204, das das Sicherungsteil 203 in der Nut 205 des Bolzens 202 festlegt.

Im Unterschied zu den Sicherungsteilen 3, 103 besteht das Sicherungsteil 203 nicht aus einem Draht, sondern aus einem u-förmigen Stahlblech, kann also beispielsweise durch Stanzen hergestellt werden. Im Bereich seines Bogens 208, der die einzelnen Schenkel 207 verbindet, ist eine Griffausnehmung 226 vorgesehen, um eine bessere Handhabung zu ermöglichen.

Als weiterer Unterscheid weist der obere Schenkel 209 des Halteelements 204 nach unten herunter gebogene Federlaschen 222 auf, die im Bereich seines freien Endes angeordnet sind und aus seiner Fläche nach unten schräg in Sicherungsrichtung S heraus stehen. Die Enden dieser Federlaschen 222 bilden die Rastflächen 219 für das Sicherungsteil 203.

Ferner besitzt das Halteelement 204 durch nach oben gebogene seitliche Laschen bzw. Aufkantungen des Schenkels 210 ausgebildete Seitenwände 223, die den Raum zwischen den Schenkeln 209 und 210 des Halteteils 204 seitlich verschließen, so dass ein seitliches Aufbiegen des Halteteils nicht möglich ist.

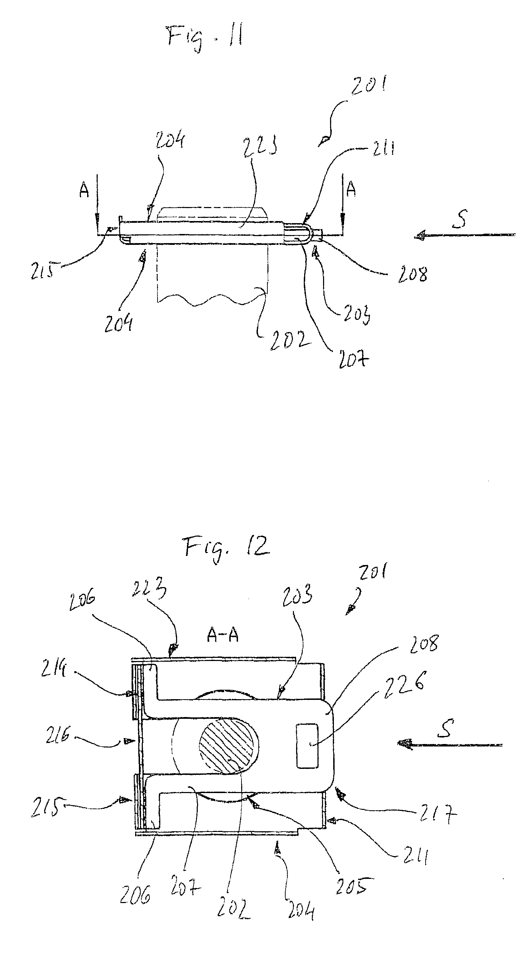

Die Schenkel 209 und 210 laufen zusätzlich zu den Federlaschen 222 leicht aufeinander zu, weisen also ebenfalls eine Vorspannung auf. Der obere Schenkel 209 weist ferner eine Abwinklung 214 auf, die nicht nach oben, sondern nach unten gerichtet ist (siehe Figur 12). Somit ist der Raum zwischen den Schenkeln 209, 210 bis auf die Ausnehmung 217 und das Demontagefenster 216 praktisch verschlossen.

Auch wurde auf Führungslaschen an der Durchbrechung 213 verzichtet.

Somit weist das Halteelement 204 in dieser Ausführungsform neben der Schutz- und Verliersicherungsfunktion auch die Haltefunktion auf. Der Sicherungsbügel 203 hat nur eine Sicherungsfunktion.

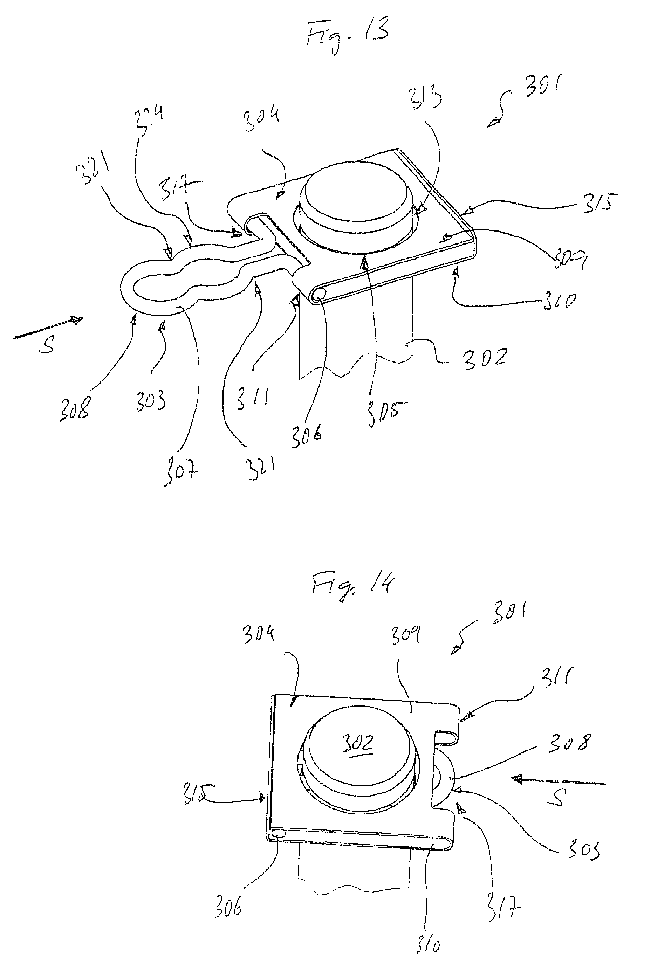

In den Figuren 13 bis 16 ist eine nochmals veränderte Variante 301 der zuvor beschriebenen Bolzensicherungen 1, 101, 201 beschrieben.

Die Bolzensicherung 301 besteht wie die zuvor beschriebenen ebenfalls aus einem Sicherungsteil 303 und einem Element 304. Allerdings unterscheidet sich die Bolzensicherung 301 von den zuvor beschriebenen Ausführungsformen dadurch, dass die Festlegung des Sicherungsteils 303 in der Nut 305 des Bolzens 302 nicht durch das Element vorgenommen wird, sondern das Sicherungsteil 303 mit zwei Einschnürungen 321 und einer dazwischen liegenden bogenförmigen Aufweitung 325 ausgestaltet ist, so dass das Sicherungsteil 303 mit seiner Aufweitung 324 den Bolzen 302 in der Nut 305 klemmend umgreift. Die Aufweitung 324 ist entsprechend dem Durchmesser des Bolzens 302 in der Nut 305 angepasst.

Dazu ist sind die Maße der Einschnürungen 321 so gewählt, dass das Sicherungsteil 303 zwar einfach, aber doch bestimmt in die Nut 305 unter einem Auseinanderdrücken seiner Schenkel 307 geschoben werden kann. Sobald das Sicherungsteil 303 dann mit der ersten Einschnürung 321 den Bolzen 302 in der Nut 305 passiert hat, schnappen die Schenkel 307 zurück und die Aufweitung 324 umgreift den Bolzen 302 klemmend in der Nut 305. Die zweite Einschnürung 321 begrenzt die Aufweitung 324 auf der anderen Seite.

Das Element 304 hat also in der vorliegenden Ausführungsform die Funktion eines Schutzelements vor einem unbeabsichtigten entsichern des Sicherungsteils 303. Diese Funktion kann das Element 304 ausüben, da es einerseits in Sicherungsrichtung S und somit quer zur Längsrichtung des Bolzens 302 sich am Bolzen 302 abstützt und andererseits das Sicherungsteil 303 sich in der Sicherungsstellung innerhalb der Außenkontur des Elements befindet. Äußere mechanische Einwirkungen in oder entgegen der Sicherungsrichtung S werden daher nicht in das Sicherungsteil 303, sondern über das Element 304 in den Bolzen 302 eingeleitet.

Daneben besitzt das Element 304 auch die oben bereits dargestellte Verliersicherungsfunktion, da es über die Abwinkelungen 306 des Sicherungsteils 303 mit diesem unverlierbar verbunden ist.

Es versteht sich, dass auch Kombinationen der vier verschiedenen Ausführungsformen der Bolzensicherungen 1, 101, 201, 301 möglich sind.

### Bezugszeichenliste

- 1, 101, 201, 301: Bolzensicherung
- 2, 102, 202, 302: Bolzen
- 3, 103, 203, 303: Sicherungsteil
- 4, 104, 204, 304: Halteelement, Element
- 5, 105, 205, 305: Nut
- 6, 106, 206, 306: Abwinkelung
- 7, 107, 207, 307: Schenkel
- 8, 108, 208, 308: Bogen
- 9, 109, 209, 309: Schenkel
- 10, 110, 210, 310: Schenkel
- 11, 111, 211, 311: Bogen
- 12: Ausnehmung
- 13, 113, 213, 313: Durchbrechung
- 14: Abwinklung
- 15, 115, 215, 315: Abwinklung
- 16, 116, 216: Demontagefenster
- 17, 117, 217, 317: Ausnehmung
- 18, 118: Führungslasche
- 19, 119, 219: Rastfläche
- 120: Ecken
- 121, 321: Einschnürung
- 222: Federlasche
- 223: Seitenwände
- 124, 324: Aufweitung
- 226: Griffausnehmung
- 127: Hebellasche

- S: Sicherungsrichtung

## Patentansprüche

1. Anordnung zur axialen Sicherung eines mit einer Nut (5, 105, 205, 305) versehenen Bolzens (2, 102, 202, 302) mit einem in einer Sicherungsstellung in die Nut (5, 105, 205, 305) an zumindest gegenüberliegenden Bereichen der Nut eingreifenden und in der Sicherungsstellung dort gehaltenen Sicherungsteil (3, 103, 203, 303), wobei die Anordnung ferner ein gesondertes in axialer Richtung des Bolzens von diesem durchgriffenes Element (4, 104, 204, 304) aufweist, das von dem Sicherungsteil (3, 103, 203, 303) in Sicherungsstellung in Höhe der Nut (5, 105, 205, 305) festgelegt ist und das das Sicherungsteil (3, 103, 203, 303) in der Sicherungsstellung zumindest teilweise umgreift, wobei das Sicherungsteil (3, 103, 203, 303) zum Lösen aus der Sicherungsstellung relativ zu dem Element (4, 104, 204, 304) in eine Offenstellung verschieblich bewegbar ist **dadurch gekennzeichnet, dass** das Element (4, 104, 204, 304) im Wesentlichen ein u-förmiges Blech ist, das das Sicherungsteil (3, 103, 203, 303) zumindest in der Sicherungsstellung teilweise umgreift, und in der Mitte des Elements (4, 104, 204, 304) eine Durchbrechung (13, 113, 213, 313) zum Aufschieben auf den Bolzen (2, 102, 202, 302) aufweist.

2. Anordnung nach Anspruch 1, **dadurch gekennzeichnet, dass** das Element (4, 104, 204, 304) das Sicherungsteil (3, 103, 203, 303) in der Sicherungsstellung innerhalb seiner Kontur aufnimmt.

3. Anordnung nach einem der vorhergehenden Ansprüche, **dadurch gekennzeichnet, dass** Sicherungsteil ein u-förmiger Sicherungsbügel (3, 103, 203, 303) ist.

4. Anordnung nach Anspruch 3, **dadurch gekennzeichnet, dass** der u-förmige Sicherungsbügel (3, 103, 203, 303) zwei parallele Schenkel (7, 107, 207, 307) aufweist, an deren freien Enden sich nach außen gerichtete Abwinkelungen (6, 106, 206, 306) anschließen über die das Sicherungsteil (3, 103, 203, 303) mit dem Element (4, 104, 204) verbunden ist.

5. Anordnung nach Anspruch 4, **dadurch gekennzeichnet, dass** der Sicherungsbügel (103, 303) mindestens eine Einschnürung (121, 321) und eine Aufweitung (124, 324) derart aufweist, dass der Sicherungsbügel (103, 303) klemmend an der Nut (105, 305) in Sicherungsstellung festlegbar ist.

6. Anordnung nach einem der Ansprüche 1 bis 5, **dadurch gekennzeichnet, dass** an der Durchbrechung (13, 113) des Elements (4, 104) Führungslaschen (18, 118) angrenzen, deren Länge in Aufschieberichtung des Elements (4, 104) auf den Bolzen (2, 102) gesehen größer als die Breite der Nut (5, 105) ist.

7. Anordnung nach einem der vorhergehenden Ansprüche, **dadurch gekennzeichnet, dass** das Sicherungsteil (3, 103, 203, 303) zwischen den Schenkeln (9, 109, 209, 309; 10, 110, 210, 310) des Elements (4, 104, 204, 304) aus seiner Offensteliung an einem Ende des Elements (4, 104, 204, 304) in Sicherungsrichtung (S) in seine Sicherungsstellung an dem anderen Ende des Elements (4, 104, 204, 304) verschiebbar ist.

8. Anordnung nach einem der vorhergehenden Ansprüche, **dadurch gekennzeichnet, dass** das Element (4, 104, 204) federnd vorgespannte Rastflächen (19, 119, 219) aufweist, die ein Zurückbewegen des Sicherungsteils (3, 103, 203) aus der Sicherungsstellung in die Offenstellung verhindern.

9. Anordnung nach einem der Ansprüche 4 bis 8, **dadurch gekennzeichnet, dass** das Sicherungsteil (3, 103, 203) über die Abwinkelungen (6, 106, 206) in der Sicherungsstellung gehalten wird.

10. Anordnung nach Anspruch 8, **dadurch gekennzeichnet, dass** ein Schenkel (9, 109, 209) des Elements (4, 104, 204) im Bereich seines freien Endes zur Ausbildung der Rastflächen (19, 119, 219) in der Sicherungsstellung an dem anderen Schenkel (10, 110, 210) federnd vorgespannt anliegt.

11. Anordnung nach Anspruch 10, **dadurch gekennzeichnet, dass** der andere Schenkel (10, 110, 210) länger als der Schenkel (9, 109, 209) ist, an dem freien Ende des anderen Schenkels (10, 110, 210) mindestens eine Abwinkelung (15, 115, 215) angeordnet ist und in der Sicherungsstellung das Sicherungsteil (3, 103, 203) mit seinen Abwinkelungen (6, 106, 206) zwischen der Abwinkelung (15, 115, 215) des anderen Schenkels (10, 110, 210) und den Rastflächen (19, 119, 219) des Schenkels (9, 109, 209) gehalten ist.

12. Anordnung nach einem der Ansprüche 8 bis 12, **dadurch gekennzeichnet, dass** an dem Schenkel (9) die Rastflächen (19) in der Weise ausgebildet sind, dass das freie Ende des Schenkels (9) quer zur Sicherungsrichtung (S) bis zur Anlage an den anderen Schenkel (10) gebogen ist und das freie Ende des Schenkels (9) eine Abwinkelung (14) aufweist, an deren Seite die Rastflächen (19) ausgebildet sind, an die sich Ausnehmungen (12) zur Durchführung der Schenkel (7) des Sicherungsteils (3) anschließen.

13. Anordnung nach einem der Ansprüche 8 bis 12, **dadurch gekennzeichnet, dass** an dem Schenkel (109) die Rastflächen (119) in der Weise ausgebildet sind, dass das freie Ende des Schenkels (109) jeweils schräg zur Sicherungsrichtung (S) bis zur Anlage an den anderen Schenkel (110) gebogen ist, an deren freien Enden die Rastflächen (119) ausgebildet sind.

14. Anordnung nach einem der Ansprüche 8 bis 12, **dadurch gekennzeichnet, dass** an dem Schenkel (209) die Rastflächen (219) in der Weise ausgebildet sind, dass in dem freien Ende des Schenkels (209) schräg in Richtung zu dem anderen Schenkel (210) gebogene Federlaschen (222) angeordnet sind, an deren freien Enden die Rastflächen (219) ausgebildet sind.

15. Anordnung nach einem der Ansprüche 5 bis 15, **dadurch gekennzeichnet, dass** das Element (4, 104, 204, 304) im Bogen (11, 111, 211, 311) zwischen den beiden Schenkeln (9, 109, 209, 309; 10, 110, 210, 310) eine Ausnehmung (17, 117, 217, 317) aufweist, die derart bemessen ist, dass das Sicherungsteil (3, 103, 203, 303) mit seinen beiden Schenkeln (7, 07, 207, 307) durch die Ausnehmung (17, 17, 217, 317) auf dem Weg aus der Sicherungsstellung in die Offenstellung hindurch schiebbar ist.

16. Anordnung nach einem der Ansprüche 11 bis 15, **dadurch gekennzeichnet, dass** in dem Element (4, 104, 204) ein Demontagefenster (16, 116, 216) vorgesehen ist, durch das das Element (4, 104, 204) zur Freigabe des Sicherungsteil (3, 103, 203) entsichert werden kann.

17. Anordnung nach Anspruch 16, **dadurch gekennzeichnet, dass** das Demontagefenster (16, 116, 216) in der mindestens einen Abwinkelung (15, 115, 215) vorgesehen ist.

18. Anordnung nach einem der Ansprüche 16 oder 17, **dadurch gekennzeichnet, dass** das Element (104) eine Hebellasche (127) zur Freigabe des Sicherungsbügels (103) aufweist.

19. Anordnung nach einem der vorhergehenden Ansprüche, **dadurch gekennzeichnet, dass** das Element (204) seitliche Aufkantungen (223) derart aufweist, dass diese den Raum zwischen den Schenkein (209, 210) des Elements (204) seitlich verschließen.

## Claims

1. Arrangement for securing in the axial direction a pin (2, 102, 202, 302) provided with a groove (5, 105, 205, 305), having a securing part (3, 103, 203, 303) which, in a securing position, engages in the groove (5, 105, 205, 305) at least in opposing regions thereof and which is held therein in the securing position, the arrangement also having a separate member (4, 104, 204, 304) through which the pin passes in the axial direction of the pin and which is fixed in the securing position, on a level with the groove (5, 105, 205, 305), by the securing part (3, 103, 203, 303) and which fits at least partly round the securing part (3, 103, 203, 303) in the securing position, the securing part (3, 103, 203, 303) being slidably movable relative to the member (4, 104, 204, 304) to an open position, for release from the securing position, **characterised in that** the member (4, 104, 204, 304) is in essence a U-shaped metal plate which fits partly round the securing part (3, 103, 203, 303) at least in the securing position and which has, in the centre of the member (4, 104, 204, 304), a perforation (13, 113, 213, 313) for sliding onto the pin (2, 102, 202, 302).

2. Arrangement according to claim 1, **characterised in that** the member (4, 104, 204, 304) receives the securing part (3, 103, 203, 303) within its outline in the securing position.

3. Arrangement according to either of the preceding claims, **characterised in that** the securing part is a U-shaped securing loop (3, 103, 203, 303).

4. Arrangement according to claim 3, **characterised in that** the U-shaped securing loop (3, 103, 203, 303) has two parallel side portions (7, 107, 207, 307) to the free ends of which are connected outwardly directed angled portions (6, 106, 206, 306) by means of which the securing part (3, 103, 203, 303) is connected to the member (4, 104, 204).

5. Arrangement according to claim 4, **characterised in that** the securing loop (103, 303) has at least one constriction (121, 321) and one widened area (124, 324) in such a way that the securing loop (103, 303) can be fixed to the groove (105, 305) in the securing position by a clip action.

6. Arrangement according to one of claims 1 to 5, **characterised in that** adjoining the perforation (13, 113) in the member (4, 104) there are guiding tabs (18, 118) whose length, looking in the direction in which the member (4, 104) is slid onto the pin (2, 102), is greater than the width of the groove (5, 105).

7. Arrangement according to one of the preceding claims, **characterised in that**, between the limbs (9, 109, 209, 309; 10, 110, 210, 310) of the member (4, 104, 204, 304), the securing part (3, 103, 203, 303) can be slid in the securing direction (S) from its open position at one end of the member (4, 104, 204, 304) to its securing position at the other end of the member (4, 104, 204, 304).

8. Arrangement according to one of the preceding claims, **characterised in that** the member (4, 104, 204) has resiliently pre-loaded latching surfaces (19, 119, 219) which prevent the securing part (3, 103, 203) from moving back from the securing position to the open position.

9. Arrangement according to one of claims 4 to 8, **characterised in that** the securing part (3, 103, 203) is held in the securing position by means of the angled portions (6, 106,206).

10. Arrangement according to claim 8, **characterised in that**, in the securing position, one limb (9, 109, 209) of the member (4, 104, 204) rests against the other limb (10, 110, 210) in the region of its free end for forming the latching surfaces (19, 119, 219), under resilient pre-loading.

11. Arrangement according to claim 10, **characterised in that** the other limb (10, 110, 210) is longer than the one limb (9, 109, 209), at least one angled portion (15, 115, 215) is arranged at the free end of the other limb (10, 110, 210), and, in the securing position, the securing part (3, 103, 203) is held between the angled portion (15, 115, 215) of the other limb (10, 110, 210) and the latching surfaces (19, 119, 219) of the one limb (9, 109, 209) by its angled portions (6, 106, 206).

12. Arrangement according to one of claims 8 to 12, **characterised in that** the latching surfaces (19) are formed on the one limb (9) by bending the free end of the limb (9) transversely to the securing direction (S) until it rests against the other limb (10), and the free end of the one limb (9) has an angled portion (14) on the side of which the latching surfaces (19) are formed, which latter are adjacent to openings (12) for the side portions (7) of the securing part (3) to pass through.

13. Arrangement according to one of claims 8 to 12, **characterised in that** the latching surfaces (119) are formed on the one limb (109) by bending each side of the free end of the limb (109) obliquely to the securing direction (S) until it rests against the other limb (110), at whose free ends the latching surfaces (119) are formed.

14. Arrangement according to one of claims 8 to 12, **characterised in that** the latching surfaces (219) are formed on the one limb (109) by arranging at the free end of the limb (209) resilient tabs (222) which are bent obliquely in the direction of the other limb (210) and at whose free ends the latching surfaces (219) are formed.

15. Arrangement according to one of claims 5 to 15, **characterised in that** the member (4, 104, 204, 304) has, in the arcuate fold (11, 111, 211, 311) between the two limbs (9, 109, 209, 309; 10, 110, 210, 310), an opening (17, 117, 217, 317) which is of a size such that the securing part (3, 103, 203, 303) can be slid through the opening (17, 117, 217, 317) by its two side portions (7, 107, 207, 307) on its way from the securing position to the open position.

16. Arrangement according to one of claims 11 to 15, **characterised in that** there is provided in the member (4, 104, 204) an aperture for removal (16, 116, 216) through which the member (4, 104, 204) can be unlatched to release the securing part (3, 103, 203).

17. Arrangement according to claim 16, **characterised in that** the aperture for removal (16, 116, 216) is provided in the at least one angled portion (15, 115, 215).

18. Arrangement according to either of claims 16 and 17, **characterised in that** the member (104) has a levering tongue (127) to release the securing loop (103).

19. Arrangement according to one of the preceding claims, **characterised in that** the member (204) has lateral turned-up edges (223) in such a way that these latter close off the space between the limbs (209, 210) of the member (204).

## Revendications

1. Dispositif pour bloquer axialement un boulon (2, 102, 202 ,302), doté d'une gorge (5, 105, 205, 305), au moyen d'une pièce de blocage (3, 103, 203, 303) qui s'engage dans une position de blocage dans la gorge (5, 105, 205, 305) dans des régions au moins opposées de l'écrou où elle est maintenue dans cette position de blocage, le dispositif comportant en outre un élément séparé (4, 104, 204, 304) qui est traversé par le boulon dans une direction axiale de celui-ci et qui est immobilisé par la pièce de blocage (3, 103, 203, 303) dans la position de blocage à hauteur de la gorge (5, 105, 205, 305) et entoure au moins partiellement la pièce de blocage (3, 103, 203, 303) dans la position de blocage, la pièce de blocage (3, 103, 203, 303) étant mobile de manière à coulisser par rapport à l'élément (4, 104, 204, 304) de la position de blocage dans une position d'ouverture en vue du desserrage, **caractérisé en ce que** l'élément (4, 104, 204, 304) est sensiblement une tôle en forme de U qui s'engage autour de la pièce de blocage (3, 103, 203, 303) au moins partiellement dans la position de blocage, et qui comporte au milieu de l'élément (4, 104, 204, 304) un passage (13, 113, 213, 313) permettant de faire glisser ledit dispositif sur le boulon (2, 102, 202, 302).

2. Dispositif selon la revendication 1, **caractérisé en ce que** dans la position de blocage l'élément (4, 104, 204, 304) reçoit la pièce de blocage (3, 103, 203, 303) à l'intérieur de son contour.

3. Dispositif selon l'une des revendications précédentes, **caractérisé en ce que** la pièce de blocage est un étrier de blocage en forme de U (3, 103, 203, 303).

4. Dispositif selon la revendication 3, **caractérisé en ce que** l'étrier de blocage en forme de U (3, 103, 203, 303) comporte deux branches parallèles (7, 107, 207, 307) dont leur extrémité libre se termine par une section coudée orientée vers l'extérieur (6, 106, 206, 306) permettant de relier la pièce de blocage (3, 103, 203, 303) à l'élément (4, 104, 204).

5. Dispositif selon la revendication 4, **caractérisé en ce que** l'étrier de blocage (103, 303) comporte au moins un rétrécissement (121, 321) et un élargissement (124, 324) de telle sorte que l'étrier de blocage (103, 303) peut être immobilisé dans la position de blocage par serrage au niveau de la gorge (105, 305).

6. Dispositif selon l'une des revendications 1 à 5, **caractérisé en ce que** le passage (13, 113) de l'élément (4, 104) est bordé par des languettes de guidage (18, 118) dont la longueur est supérieure à la largeur de la gorge (5, 105) lorsque l'on regarde dans la direction de coulissement de l'élément (4, 104) sur le boulon (2, 102).

7. Dispositif selon l'une des revendications précédentes, **caractérisé en ce que** la pièce de blocage (3, 103, 203, 303) est apte à coulisser entre les branches (9, 109, 209, 309 ; 10, 110, 210, 310) de l'élément (4, 104, 204, 304) dans la direction de blocage (S) de sa position d'ouverture à une extrémité de l'élément (4, 104, 204, 304) dans sa position de blocage à l'autre extrémité de l'élément (4, 104, 204, 304).

8. Dispositif selon l'une des revendications précédentes, **caractérisé en ce que** l'élément (4, 104, 204) présente des surfaces de d'encliquetage (19, 119, 219) précontraintes élastiquement qui empêchent la pièce de blocage (3, 103, 203) de retourner de la position de blocage dans la position d'ouverture.

9. Dispositif selon l'une des revendications 4 à 8, **caractérisé en ce que** la pièce de blocage (3, 103, 203) est maintenue dans la position de blocage par les sections coudées (6, 106, 206).

10. Dispositif selon la revendication 8, **caractérisé en ce qu'**une branche (9, 109, 209) de l'élément (4, 104, 204) porte avec une précontrainte élastique contre l'autre branche (10, 110, 210) dans la région de son extrémité libre pour former les surfaces d'encliquetage (19, 119, 219) dans la position de blocage.

11. Dispositif selon la revendication 10, **caractérisé en ce que** l'autre branche (10, 110, 210) est plus longue que la branche (9, 109, 209), **en ce que** au moins une section coudée (15, 115, 215) est disposée à l'extrémité libre de l'autre branche (10, 110, 210) et **en ce que** dans la position de blocage la pièce de blocage (3, 103, 203) est maintenue avec sa section coudée (6, 106, 206) entre la section coudée (15, 115, 215) de l'autre branche (10, 110, 210) et les surfaces d'encliquetage (19, 119, 219) de la branche (9, 109, 209).

12. Dispositif selon l'une des revendications 8 à 12, **caractérisé en ce que** les surfaces d'encliquetage (19) sont conformées au niveau de la branche (9) de telle sorte que l'extrémité libre de la branche (9) est pliée transversalement à la direction de blocage (S) jusqu'à porter contre l'autre branche (10) et l'extrémité libre de la branche (9) comporte une section coudée (14) sur le côté de laquelle sont conformées les surfaces d'encliquetage (19) auxquelles se raccordent des évidements (12) destinés au passage de la branche (7) de la pièce de blocage (3).

13. Dispositif selon l'une des revendications 8 à 12, **caractérisé en ce que** les surfaces d'encliquetage (119) sont conformées au niveau de la branche (109) de telle sorte que l'extrémité libre de la branche (109) est pliée obliquement par rapport à la direction de blocage (S) jusqu'à porter contre l'autre branche (110) à l'extrémité libre de laquelle sont conformées les surfaces d'encliquetage (119).

14. Dispositif selon l'une des revendications 8 à 12, **caractérisé en ce que** les surfaces d'encliquetage (219) sont conformées au niveau de la branche (209) de telle sorte que à l'extrémité libre de la branche (209) sont disposées des languettes élastiques (222), pliées obliquement en direction de l'autre branche (210), à l'extrémité libre desquelles sont conformées les surfaces d'encliquetage (209).

15. Dispositif selon l'une des revendications 5 à 15, **caractérisé en ce que** l'élément (4, 104, 204, 304) comporte dans le pli (11, 111, 211, 311) entre les deux branches (9, 109, 209, 309 ; 10, 110, 210, 310) un évidement (17, 117, 217, 317) qui est dimensionné de telle sorte que la pièce de blocage (3, 103, 203, 303) est apte à coulisser avec ses deux branches (7, 107, 207, 307) de la position de blocage dans la position d'ouverture en passant à travers l'évidement (17, 117, 217, 317).

16. Dispositif selon l'une des revendications 11 à 15, **caractérisé en ce qu'**il est prévu dans l'élément (4, 104, 204) une fenêtre de démontage (16, 116, 216) permettant de débloquer l'élément (4, 104, 204) pour libérer la pièce de blocage (3, 103, 203).

17. Dispositif selon la revendication 16, **caractérisé en ce que** la fenêtre de démontage (16, 116, 216) est ménagée dans l'au moins une section coudée (15, 115, 215).

18. Dispositif selon l'une des revendications 16 ou 17, **caractérisé en ce que** l'élément (104) comporte une languette formant levier (127) destinée à libérer l'étrier de blocage (103).

19. Dispositif selon l'une des revendications précédentes, **caractérisé en ce que** l'élément (204) comporte des bandes latérales (223) de telle sorte que celles-ci ferment latéralement l'espace entre les branches (209, 210) de l'élément (204).
